Europäisches Patentamt

European Patent Office

Office européen des brevets

(11) Veröffentlichungsnummer: **0 075 609**
**B1**

(12) EUROPÄISCHE PATENTSCHRIFT

(45) Veröffentlichungstag der Patentschrift :
21.11.85

(51) Int. Cl.⁴ : **C 03 B 19/10**

(21) Anmeldenummer : 81107705.6

(22) Anmeldetag : 29.09.81

(54) Verfahren und Vorrichtung zur Granulation von Glasschmelzen.

(43) Veröffentlichungstag der Anmeldung :
06.04.83 Patentblatt 83/14

(45) Bekanntmachung des Hinweises auf die Patenterteilung : 21.11.85 Patentblatt 85/47

(84) Benannte Vertragsstaaten :
BE DE FR GB IT NL

(56) Entgegenhaltungen :
FR-A- 1 582 662
LU-A-    78 349
US-A- 3 243 273

(73) Patentinhaber : Degussa Aktiengesellschaft
Weissfrauenstrasse 9
D-6000 Frankfurt am Main 1 (DE)

(72) Erfinder : Kilian, Eberhard, Dipl.-Ing.
Am Schwaberg 55
D-6450 Hanau 6 (DE)
Erfinder : Schneider, Georg
Gondsrother Strasse 17
D-6467 Hasselroth I (DE)

**Beschreibung**

Die Erfindung betrifft ein Verfahren zur Granulation von Glasschmelzen durch Inberührungbringen der senkrecht nach unten fließenden Glasschmelze mit waagerechten oder schräg nach unten gerichteten Hochdruckwasserstrahlen und eine Vorrichtung zur Durchführung dieses Verfahrens.

Es ist wünschenswert, Glasschmelzen, insbesondere Glasurfrittenschmelzen während des Ablassvorganges aus Schmelzöfen oder Schmelzwannen derart mit Wasser abzukühlen, dass unmittelbar hinter der Granuliervorrichtung gleichförmige Glasgranalien im Grössenbereich zwischen 1 und 5 mm anfallen und der Anfall wesentlich grösserer und wesentlich kleinerer Teile ausgeschlossen ist.

Es ist bekannt, zur Abkühlung von Glasurfrittenschmelzen und zur Durchführung des Granuliervorganges den Schmelzfluss langsam in wassergefüllte Kübel einzuleiten. Bei genügend langer Einleitdauer und unter Rühren der Granalien im Kübel können Glasschmelzen auf diese Weise granuliert werden.

Nachteilig bei diesem Verfahren ist, daß bei mittelzähen und zähen Fritten sehr unterschiedlich große Granalien entstehen, etwa 5 bis 500 mm und größer.

Aus der US-A 3 243 273 und der LU-A 78 349 sind Verfahren und Vorrichtungen zum Granulieren von flüssigem Glas bzw. flüssiger Schlacke bekannt, bei denen senkrecht nach unten fließende Schmelzen von einer Seite waagerecht oder schräg nach unten mit Hochdruckwasserstrahlen bzw. Druckluft und Wasser beaufschlagt werden. Auch hiermit erhält man kein gleichmäßiges Granulat mit engem Kornspektrum.

Der Erfindung liegt daher die Aufgabe zugrunde, ein Verfahren und eine Vorrichtung zur Granulation von Glasschmelzen durch Inberührungbringen der senkrecht nach unten fließenden Glasschmelze mit waagerecht oder schräg nach unten gerichteten Hochdruckwasserstrahlen zu finden, die ein gleichmäßiges Granulat direkt hinter dem Schmelzaustritt aus dem Ofen im Durchlauf ergeben, ohne weitere Nachzerkleinerung.

Diese Aufgabe wurde erfindungsgemäß dadurch gelöst, daß der Druck der Wasserstrahlen zwischen 20 und 500 bar beträgt und diese die nach unten fließende Glasschmelze ringsum oder U-förmig umgeben. Vorzugsweise liegt der Druck der Wasserstrahlen zwischen 70 bis 200 bar.

Der Winkel ($\alpha$), unter dem die Hochdruckwasserstrahlen auf die nach unten fließende Glasschmelze treffen, liegt vorteilhafterweise zwischen 15 und 180°, bezogen auf den Kegelwinkel, der sich aus dem Schnittpunkt der Wasserstrahlen zweier gegenüberliegender Düsen ergibt. Vorzugsweise liegt dieser Schnittwinkel ($\alpha$) zwischen 60 und 180°.

Dieses Granulationsverfahren wird vorteilhafterweise mit einer Vorrichtung durchgeführt, die eine Auslaufrinne für die Glasschmelze, einen Auslauftrichter und einen Auffangbehälter für die Granalien umfaßt, wobei unterhalb der Auslaufrinne Düsenträger angeordnet sind, die die nach unten fallende Glasschmelze ganz oder U-förmig umgeben und gleichzeitig als Wasserzuführung dienen, und auf denen mehrere waagerechte bzw. schräg nach unten gerichtete Düsen unter Bildung eines Schnittwinkels ($\alpha$) zwischen den Achsen einander gegenüberliegender Düsen von 15 bis 180° angeordnet sind. Vorzugsweise sind die Düsen unter Bildung eines Schnittwinkels ($\alpha$) zwischen 60 und 180° angeordnet.

Die Düsen können sowohl als Bohrungen im Düsenträger ausgebildet sein oder aus aufgesetzten Einsteckdüsen bestehen. Die Zahl der Düsen pro Meter Düsenträger beträgt im allgemeinen 10 bis 40.

Es ist vorteilhaft, die Düsen als Flachstrahldüsen auszubilden, mit einem Öffnungswinkel von 10 bis 90°. Vorzugsweise werden benachbarte Düsen unter verschiedenen Winkeln angeordnet, so daß sich die ausgebildeten flachen Wasserstrahlen zwar überdecken, jedoch nicht an den Seiten treffen.

Die Abbildungen I und II zeigen schematisch eine beispielhafte Ausführungsform der Vorrichtung von der Seite bzw. von oben. Die Vorrichtung besteht aus einer Ablaufrinne 1 für die Glasschmelze 2, einem Auslauftrichter (3) und einem Auffangbehälter 4. Unterhalb der Auslaufrinne 1, die von einem Glasschmelzofen beschickt wird, ist ein Düsenträger 5 angebracht, der die nach unten fallende Glasschmelze 2 ganz oder U-förmig umgibt. Vorzugsweise ist dieser Düsenträger 5 U-förmig ausgebildet. Er trägt eine Reihe von Flachstrahldüsen (6), beispielsweise mit einem Öffnungswinkel von 30° und einem Düsendurchmesser von 1,8 bis 2 mm. Diese sind unter einem Schnittwinkel ($\alpha$) von beispielsweise 70° angeordnet (Abbildung Ia). Die Düsen 7 der Querverbindung zwischen den beiden U-Schenkeln 9 sind hierbei im wesentlichen senkrecht nach unten gerichtet. Die Düsen 6 auf den beiden U-Schenkeln 9 sind gleichständig gegenüber so angeordnet, daß sich die ausgebildeten Flachstrahlen mit ihren Seiten nicht treffen, jedoch überdecken. Der U-förmige Düsenträger 5 ist so längs der Auslaufrinne 1, in die der Glasfluß aus dem Ofen zunächst läuft, angeordnet, daß die Schmelze 2 über die Rinne in das offene U des Düsenträgers schießen kann. Je nachdem, ob die Schmelze zäh oder weniger zäh ist, schießt der Glasfluß weiter oder weniger weit geradeaus in Neigungsrichtung der Rinne 1, ehe er durch die Schwerkraft nach unten abgelenkt wird.

Der Glasfluß 2 wird am intensivsten dort zerkleinert, wo sich die einzelnen Düsenstrahlen treffen. Die Abmessungen des Düsenträgers ergeben sich aus den Schmelzmengen, der Viskosität der Schmelze und dem Wasserdruck. Der Auslauftrichter 3 ist so angeordnet, daß die die Glasgranalien mit sich führenden Wasserstrahlen 11 so auf die Konuswandung 10 treffen, daß sie in Spiralen rotierend in den Auffangbehälter 4 fließen.

Andere Düsenanordnungen, z. B. konzentrische oder andere Strahlenformen und Drücke ergeben ebenfalls brauchbare Granulierungsergebnisse.

Besonders vorteilhaft ist es, wenn die Düsenträger 5 mit den Düsen 6 kaskadenartig in mehreren Ebenen angeordnet sind (Abbildung III).

Der Vorteil der kaskadenartigen Anordnung der Düsenträger 5 besteht darin, daß die flüssige Schmelze zwei nachfolgende Zerkleinerungsprozesse erfährt. Teile des Schmelzstrahls, die in der ersten Düsenebene 12 nur unvollständig erfaßt wurden, gelangen in eine zweite Düsenebene 13, wo sie eine weitere Zerkleinerung erfahren. In der Praxis bedeutet dies, daß bei zwei oder mehr hintereinanderliegenden Düsenebenen die Kornverteilung zu kleinerem Korn hin verschoben, die Kornverteilung der Granalien enger und der Anteil des mittleren Korndurchmessers höher wird.

Von besonderem Vorteil ist die Anordnung der zweiten Düsenebene 13 in der Schnittebene des Strahlenwinkels 14 der ersten Düsenebene 12, weil dadurch das in der ersten Düsenebene 12 vorzerkleinerte Korn definierter in die zweite Düsenebene 13 gebracht wird, als wenn diese im Streubereich über oder unter der Schnittebene angeordnet wäre. Die Anordnung der zweiten Düsenebene 13 in der Schnittebene des Strahlenwinkels 14 der ersten Düsenebene 12 bewirkt somit, daß die Kornverteilung nicht nur durch den zweiten Zerkleinerungsschritt, sondern auch durch die definiertere Einspeisung des zu zerkleinernden Gutes eine Kornverteilung mit geringerem Korndurchmesser sowie geringere Varianz erzielt wird, gleichbedeutend mit einem höheren Anteil des mittleren Korndurchmessers.

Engere Kornverteilungen bringen Vorteile der Handhabung, insbesondere beim Mischen von Granalien mit sich. Kleines und eng verteiltes Kornkollektiv entmischt sich weniger leicht, als ein Kornkollektiv mit großer Varianz.

Spontan durch Druckgranulation abgeschreckte und zerkleinerte Schmelzen weisen als Granalien mehr Fehlstellen infolge thermospannungen auf als langsam abgeschreckte Schmelzen. Das hat zur Folge, daß bei einem nachfolgenden Mahlprozeß z. B. in einer Kugelmühle die Mahlleistung ausgedruckt in t/h etwa um 10 % bis 20 % ansteigt.

Folgende Beispiele sollen das erfindungsgemäße Verfahren näher erläutern, wobei eine Vorrichtung gemäß Abbildung I und II verwendet wurde.

Beispiel I

800 kg einer mittelzähen Schmelze wurden aus einem Drehofen in etwa 3 Minuten über die Auslaufrinne in den Düsenträger ausgegossen und beim Passieren desselben granuliert. Der Wasserdruck betrug 75 bar, die Fördermenge 255 l/min.

Das Ergebnis war ein Granulat mit einer Kornverteilung zwischen 1 und 3 mm. Es entstanden weder Glasfasern noch Granulate wesentlich über 3 mm.

Ohne die erfindungsgemäße Granuliervorrichtung erhält man Granulate mit Kornverteilungen zwischen 3 und 10 mm und mit Anteilen bis zu etwa 50 mm. Die Ablaßzeit dafür liegt bei etwa 10 Minuten.

Beispiel II

700 kg einer extrem zähen Frittenschmelze wurden aus einem Drehofen, wie unter I beschrieben, in 10 Minuten abgelassen. Die Kornverteilung lag zwischen 3 und 10 mm.

Ohne Einsatz der erfindungsgemäßen Granuliervorrichtung liegt die Kornverteilung zwischen 5 und 50 mm, die Ablaßdauer bei etwa 15 Minuten.

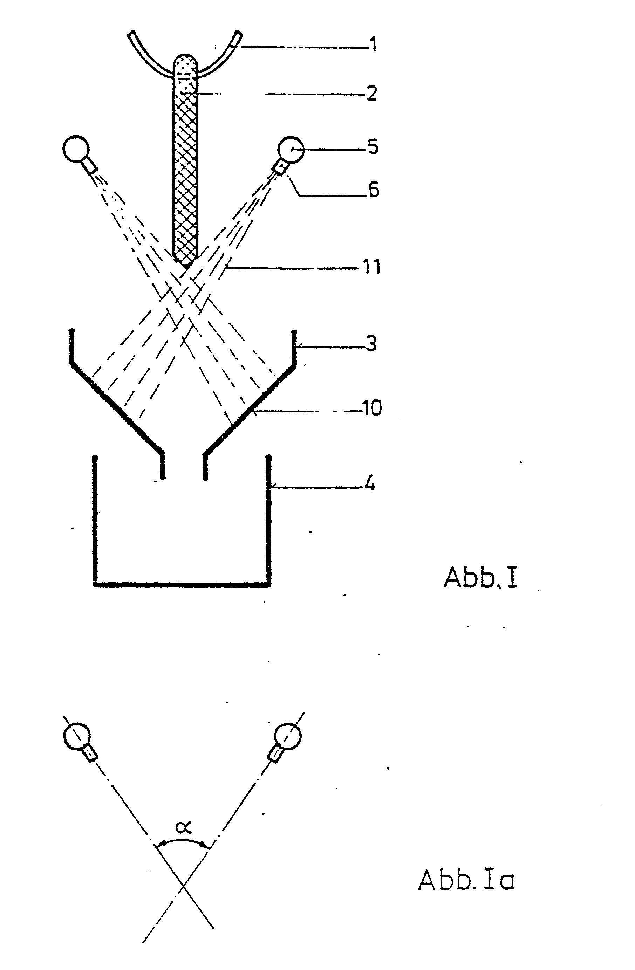

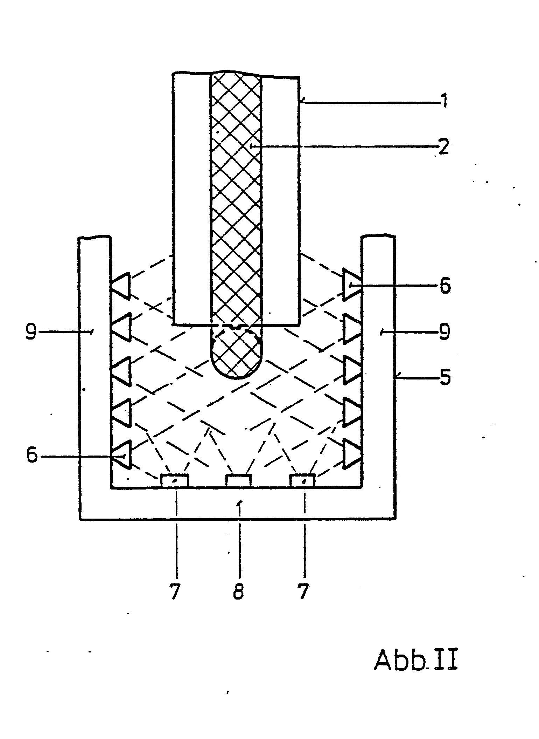

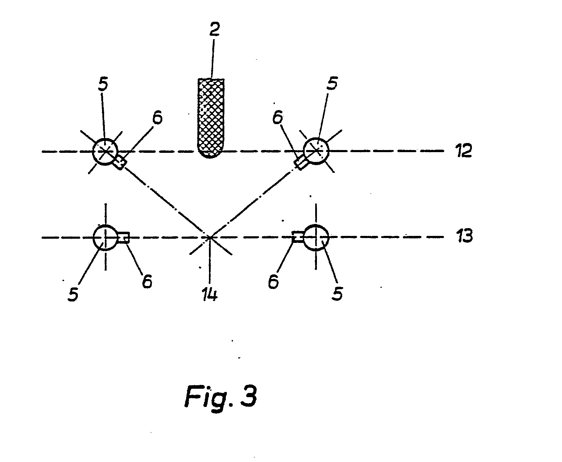

**Patentansprüche**

1. Verfahren zur Granulation von Glasschmelzen durch Inberührungbringen der senkrecht nach unten fließenden Glasschmelze mit waagerechten oder schräg nach unten gerichteten Hochdruckwasserstrahlen, dadurch gekennzeichnet, daß der Druck der Wasserstrahlen zwischen 20 und 500 bar beträgt und diese die nach unten fließende Glasschmelze ringsum oder U-förmig umgeben.

2. Verfahren nach Anspruch 1, dadurch gekennzeichnet, daß der Druck der Wasserstrahlen zwischen 70 und 200 bar liegt.

3. Verfahren nach den Ansprüchen 1 oder 2, dadurch gekennzeichnet, daß der Schnittwinkel ($\alpha$) einander gegenüberliegender Hochdruckwasserstrahlen zwischen 15 und 180° liegt.

4. Verfahren nach den Ansprüchen 1 bis 3, dadurch gekennzeichnet, daß der Schnittwinkel ($\alpha$) der Hochdruckwasserstrahlen zwischen 60 und 180° liegt.

5. Vorrichtung zur Durchführung des Verfahrens nach den Ansprüchen 1 bis 4, mit einer Auslaufrinne (1) für die Glasschmelzen, einem Auslauftrichter (3) und einem Auffangbehälter (4), gekennzeichnet durch unterhalb der Auslaufrinne (1) angeordnete, die nach unten fallende Glasschmelze (2) ganz oder U-förmig umgebende Düsenträger (5), die gleichzeitig der Wasserzuführung dienen, und durch die Anordnung mehrerer waagerechter bzw. schräg nach unten gerichteter Düsen (6) auf den Düsenträgern (5) unter Bildung eines Schnittwinkels ($\alpha$) zwischen den Achsen einander gegenüberliegender Düsen (6) von 15 bis 180°.

6. Vorrichtung nach Anspruch 5, dadurch gekennzeichnet, daß die Düsen (6) unter Bildung eines Schnittwinkels ($\alpha$) von 60 bis 180° angeordnet sind.

7. Vorrichtung nach den Ansprüchen 5 oder 6, dadurch gekennzeichnet, daß benachbarte Düsen (6) unter verschiedenen Winkeln angeordnet sind.

8. Vorrichtung nach den Ansprüchen 5 bis 7, dadurch gekennzeichnet, daß die Düsen (6) als Flachstrahldüsen mit einem Öffnungswinkel von 10 bis 90° ausgebildet sind.

9. Vorrichtung nach den Ansprüchen 5 bis 8, dadurch gekennzeichnet, daß die Düsenträger (5) pro Meter 10 bis 40 Düsen (6) tragen.

10. Vorrichtung nach den Ansprüchen 5 bis 9, dadurch gekennzeichnet, daß die Düsenträger (5) und die Düsen (6) in mehreren Ebenen angeordnet sind.

11. Vorrichtung nach Anspruch 10, dadurch gekennzeichnet, daß die zweite Düsenebene (13) in der Schnittebene des Strahlenwinkels (14) der ersten Düsenebene (12) liegt.

**Claims**

1. A process for the granulation of glass melts by contracting the vertically downwards flowing glass melts with horizontally or obliquely-downwardly-directed high pressure water jets, characterised in that the pressure of the water jets is from 20 to 500 bars and they surround the downwardly flowing glass melt completely or in the form of a U.

2. A process according to claim 1, characterised in that the pressure of the water jets is from 70 to 200 bars.

3. A process according to claim 1 or claim 2, characterised in that the angle of intersection (α) of opposite high pressure water jets is from 15 to 180°.

4. A process according to claims 1 to 3, characterised in that the angle of intersection (α) of the high pressure water jets is from 60 to 180°.

5. An apparatus for carrying out the process according to claims 1 to 4, provided with an outlet channel (1) for the glass melts, an outlet funnel (3) and a collecting container (4), characterized by nozzle supports (5) arranged below the outlet channel (1) which surround the downwardly falling glass melt (2) completely or in the form of a U and simultaneously serve to supply water, and by the arrangement of several horizontal or obliquely-downwardly oriented nozzles (6) on the nozzle supports (5) forming an angle of intersection (α) between the axes of opposite nozzles (6) of from 15 to 180°.

6. An apparatus according to claim 5, characterised in that the nozzles are arranged so that they form an angle of intersection (α) of from 60 to 180°.

7. An apparatus according to claim 5 or claim 6, characterised in that adjacent nozzles (6) are arranged at different angles.

8. An apparatus according to claims 5 to 7, characterised in that the nozzles (6) are fan jet nozzles with an aperture angle of from 10 to 90°.

9. An apparatus according to claims 5 to 8, characterised in that the nozzle supports (5) support from 10 to 40 nozzles (6) per meter.

10. An apparatus according to claims 5 to 9, characterised in that the nozzle supports (5) and the nozzles (6) are arranged in several planes.

11. An apparatus according to claim 10, characterised in that the second nozzle plane (13) is positioned in the intersecting plane of the angle of radiation (14) of the first nozzle plane (12).

**Revendications**

1. Procédé de granulation de verre fondu par mise en contact de la masse de verre fondu s'écoulant verticalement vers le bas avec des jets d'eau sous pression élevée, dirigés horizontalement ou obliquement vers le bas, procédé caractérisé en ce que la pression des jets d'eau est comprise entre 20 et 500 bars et que ces jets entourent la masse de verre fondu s'écoulant vers le bas sous forme de cercle ou de U.

2. Procédé selon la revendication 1, caractérisé en ce que la pression des jets d'eau se situe entre 70 et 200 bars.

3. Procédé selon les revendications 1 ou 2, caractérisé en ce que l'angle d'intersection (α) des jets d'eau à haute pression opposés est compris entre 15 et 180°.

4. Procédé selon les revendications 1 à 3, caractérisé en ce que l'angle d'intersection (α) des jets d'eau sous pression élevée est compris entre 60 et 180°.

5. Dispositif pour la mise en œuvre du procédé selon les revendications 1 à 4, avec une rigole d'évacuation (1) pour la masse de verre fondu, une trémie d'évacuation (3) et une cuve de réception (4), caractérisé par des supports d'injecteurs (5) disposés sous la rigole d'évacuation (1), entourant la masse de verre fondu (2) s'écoulant vers le bas complètement, ou suivant une forme de U, qui servent simultanément à l'amenée d'eau, et par la disposition de plusieurs injecteurs (6) dirigés horizontalement ou inclinés vers le bas, sur les supports d'injecteurs (5), avec formation d'un angle d'intersection (α) entre les axes des injecteurs (6) opposés, de 15 à 180°.

6. Dispositif selon la revendication 5, caractérisé en ce que les injecteurs (6) sont disposés en formant un angle d'intersection (α) de 60 à 180°.

7. Dispositif selon les revendications 5 ou 6, caractérisé en ce que des injecteurs (6) adjacents sont disposés sous des angles différents.

8. Dispositif selon les revendications 5 à 7, caractérisé en ce que les injecteurs (6) sont conçus sous forme d'injecteurs à jet plat avec un angle d'ouverture de 10 à 90°.

9. Dispositif selon les revendications 5 à 8, caractérisé en ce que les supports d'injecteurs (5) portent 10 à 40 injecteurs (6) au mètre.

10. Dispositif selon les revendications 5 à 9, caractérisé en ce que les supports d'injecteurs (5) et les injecteurs (6) sont disposés sur plusieurs plans.

11. Dispositif selon la revendication 10, caractérisé en ce que le deuxième plan d'injecteurs (13) est situé dans le plan d'intersection de l'angle de jet (14) du premier plan d'injecteurs (12).

0 075 609

Abb. I

Abb. Ia

1

Abb. II

Fig. 3